# EUROPEAN PATENT SPECIFICATION

(11) **EP 2 432 167 B1**
(45) Date of publication and mention of the grant of the patent: **07.11.2018**
(21) Application number: 10788908.1
(22) Date of filing: 12.06.2010
(51) Int. Cl.: H04L 12/26

(54) **METHOD AND APPARATUS FOR IMPLEMENTING POINT TO POINT REMOTE LOOPBACK OF ETHERNET**
VERFAHREN UND VORRICHTUNG ZUR IMPLEMENTIERUNG VON ETHERNET-PUNKT-ZU-PUNKT-FERNPRÜFSCHLEIFEN
PROCÉDÉ ET APPAREIL DE MISE EN OEUVRE DE BOUCLAGE DISTANT POINT À POINT D'ETHERNET

(30) Priority: 17.06.2009 CN 200910108325
(43) Date of publication of application: 21.03.2012
(73) Proprietor: ZTE Corporation, Shenzhen, Guangdong 518057 (CN)
(72) Inventor: CHEN, Zhi, Shenzhen Guangdong 518057 (CN)
(74) Representative: Manitz Finsterwald Patentanwälte PartmbB
(86) International application number: PCT/CN2010/073862
(87) International publication number: WO 2010/145512

(56) References cited:
- EP-A1- 1 971 086
- WO-A1-2007/058916
- WO-A1-2009/048358
- WO-A2-2009/024965
- CN-A- 1 764 133
- CN-A- 1 889 450
- CN-A- 101 599 882
- US-A1- 2005 099 954
- US-A1- 2007 025 256

## Description

### Technical Field

The present invention relates to the method and apparatus for implementing point-to-point remote loopback of the Ethernet, and more especially, to a method and apparatus for reliably implementing the point-to-point remote loopback in the operations, administration and maintenance (OAM) of the Ethernet.

### Background of the Related Art

On the background of proposing the concept of carrier grade Ethernet, the Ethernet in the First Mile Task Force of the IEEE fulfills the formulation of the IEEE 802.3ah standards. Its main purpose is to formulate a series of standards for the Ethernet physical layer and data link layer to promote the communication media of the Ethernet to play its advantages in every aspect in the deployment of the access network. The 57^{th} chapter: Operations, Administration, and Maintenance in the IEEE802.3ah provides an effective mechanism of link monitoring and failure locating (including remote loopback) to fill the blank of the OAM in the Ethernet data link layer. Specifically:

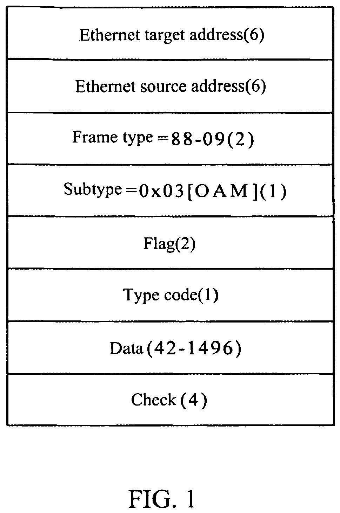

FIG. 1 shows the frame format of slow protocol frame. The Ethernet OAM protocol applies the 802.3 slow protocol frame, and refer to FIG. 1, wherein, the frame type domain is fixed as 88-09, that is, the Ethernet slow protocol frame; the sub-type domain is fixed as 0x03, that is, the Ethernet OAM frame. All other 802.3 Ethernet frames are called non-Ethernet OAM frame in the following description.

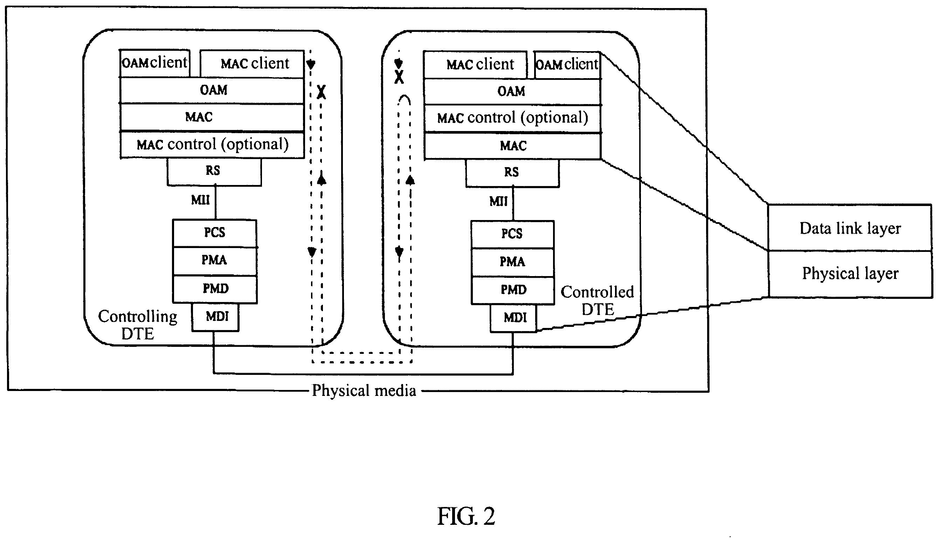

FIG. 2 illustrates the remote loopback in the prior art. After the Data Terminal Equipments (DTE) on both ends fulfill the discovery process, the DTE in the OAM active mode initiates establishment of a remote loopback under the user control; the DTE in the OAM active mode initiate ending of the remote loopback under the user control. Wherein, the DTE in the OAM active mode is called the controlling end, while the DTE in the OAM passive mode is called the controlled end. In the remote loopback, any non-Ethernet OAM frame sent by the controlling end is looped back by the controlled end and terminated at the controlling end. Refer to FIG. 2, the left side is the controlling end in the remote loopback which sends all non-Ethernet OAM frames to the peer end; the right side is the controlled end in the remote loopback which loops all the received non-Ethernet OAM frames back; the controlling end discards all the received non-Ethernet OAM frames that are looped back by the controlled end.

In the process of establishing or ending the remote loopback, the controlling end and the controlled end relate to totally four states:
(a) OAM normal state, neither end is located in the remote loopback state.
(b) Intermediate state of the controlling end establishing or ending the remote loopback: normally send and receive the Ethernet OAM frames, discard all the received non-Ethernet OAM frames while does not send any non-Ethernet OAM frame.
(c) Controlling end loopback state: normally send and receive the Ethernet OAM frames, normally send the non-Ethernet OAM frames, and discard the received non-Ethernet OAM frames looped back by the peer end.
(d) Controlled end loopback state: normally send and receive the Ethernet OAM frames, loop the received non-Ethernet OAM frames back, and do not send any non-Ethernet OAM frame.

The process of the controlling end establishing the remote loopback comprises the following steps:
(1) When the controlling end establishes the remote loopback, the controlling end first enters into the "intermediate state of the controlling end establishing or ending the remote loopback" and sends a remote loopback enabling control frame to the peer DTE.
(2) After the controlled DTE receives the remote loopback enabling control frame, it enters into the "controlled end loopback state" and sends its own state to the peer end via the ETH-OAM frames (Ethernet OAM frames).
(3) After the controlling end receives the Ethernet OAM frames including the controlled end state information and discovers that the peer end enters into the "controlled end loopback state", it enters into the "controlling end loopback state".

So far, the remote loopback is established completely.

The process of the controlling end ending the remote loopback comprises the following steps:
(4) When the controlling end ends the remote loopback, the controlling end first enters into the "intermediate state of the controlling end establishing or ending the remote loopback" and sends a remote loopback disenabling control frame to the peer DTE.
(5) After the controlled DTE receives the remote loopback enabling control frame, it enters into the "OAM normal state" and sends its own state to the peer end via the Ethernet OAM frames.
(6) After the controlling end receives the Ethernet OAM frames including the controlled end state information, it enters into the "OAM normal state".

So far, the remote loopback is ended.

However, the 57^{th} chapter: Operations, Administration, and Maintenance in the IEEE802.3ah has not defined a processing method by the DTEs on both ends in the remote loopback in the case that the link is abnormal or the peer DTE is abnormal, which causes two problems:
1. In the process of the controlling end establishing/ending the remote loopback, when the controlling end is in step (2)/(4), the peer end might not receive the transmitted enabling/disenabling control frame due to accident circumstances, thus the remote loopback cannot be established/ended.
2. After the remote loopback is established, when the link is abnormal, the DTEs on both ends cannot be restored to the normal state from the remote loop state; when either of the DTEs on both ends is abnormal, the peer DTE cannot be restored to the "OAM normal state" from the remote loopback state.

In the prior art, a timer is used to set an upper bound of the time that the controlling end is in the remote loopback. Once the timer is expired, the controlling end enforces ending of the remote loopback. The inventors of the present invention found that with this solution, there still exist the following problems:
1. The user cannot initiate a remote loopback without time restriction.
2. When both DTEs are in the remote loopback state, if the controlling DTE is abnormal, the controlled DTE cannot be restored to the "OAM normal state" from the "loopback state of the controlled end" since the controlled DTE has no remote loopback timer.
3. Besides of the problems illustrated in 1 and 2, in the overall process of establishing and ending the remote loopback, since the 57^{th} chapter: Operations, Administration, and maintenance in the IEEE 802. 3ah does not define a processing method when both the DTEs in the remote loopback are in any other abnormal states, thus there are unreliable factors in the process of establishing and/or ending the remote loopback.

Related technology is known from WO 2007/058916 A1.

### Content of the Invention

The purpose of the present invention is to provide a method and apparatus for implementing point-to-point remote loopback of the Ethernet as defined in the independent claims, to effectively ensure the reliability of the remote loopback.

A method for implementing point-to-point remote loopback of the Ethernet is provided, and the method is applied in a controlling end and/or controlled end in the process of establishing and/or ending a remote loopback, and the method comprises:
monitoring its own state; and
judge whether there is any predetermined subsequent operation in its current state according to the received operation signal or state change information.

An apparatus for implementing point-to-point remote loopback of Ethernet is also provided, and the apparatus is integrated in a controlling end and/or controlled end in the process of establishing and/or ending a remote loopback, and the apparatus comprises:
a monitoring unit, configured to monitor its own state;
a judging unit, configured to judge whether there is any predetermined subsequent operation in its own current state discovered by the monitoring unit according to the received operation signal or the state change information; and
an operating unit, configured to perform the subsequent operation when it determines that there is a subsequent operation; otherwise, to prompt an error when its own current state discovered by the monitoring unit is the OAM normal state; if its own current state is not the OAM normal state, to be restored to the OAM normal state.

The method and apparatus for implementing the point-to-point remote loopback of the Ethernet in accordance with the present invention are used to monitor the local end state, and judge whether there is any subsequent operation according to the received operation signal or the state change information, so that the local end can perform the subsequent operation in any abnormal state or be restored to the OAM normal state from any abnormal state.

### Brief Description of Drawings

FIG.1 illustrates the frame format of the 802.3 slow protocol frame;
FIG. 2 illustrates the remote loopback in the prior art;
FIG. 3 illustrates a flow chart of the method for implementing the point-to-point remote loopback of the Ethernet in the present invention;
FIG. 4 illustrates the structure of the apparatus for implementing the point-to-point remote loopback of the Ethernet in the present invention;
FIG. 5 illustrates the process of applying the method for implementing the point-to-point remote loopback of the Ethernet in the present invention to the mobile communication base station system;
FIG. 6 illustrates the process of applying the method for implementing the point-to-point remote loopback of the Ethernet to the state machine of the remote loopback controlling end in the mobile communication BSS;
FIG. 7 illustrates the process of applying the method for implementing the point-to-point remote loopback of the Ethernet to the state machine of the remote loopback controlled end in the mobile communication BSS.

Wherein, the notation of the terms used in FIG. 2 is as follows: OAM client; MAC client; OAM; MAC Control; Media Access Control (MAC); Reconciliation (RS), Media Independent interface (MII); Physical Coding Sublayer (PCS); Physical Medium Attachment (PMA); Physical Medium Dependent (PMD); Medium Dependent Interface (MDI).

### Preferred Embodiments of the Present Invention

The specific implementation of the present invention will be illustrated in detail with reference to the accompanying figures.

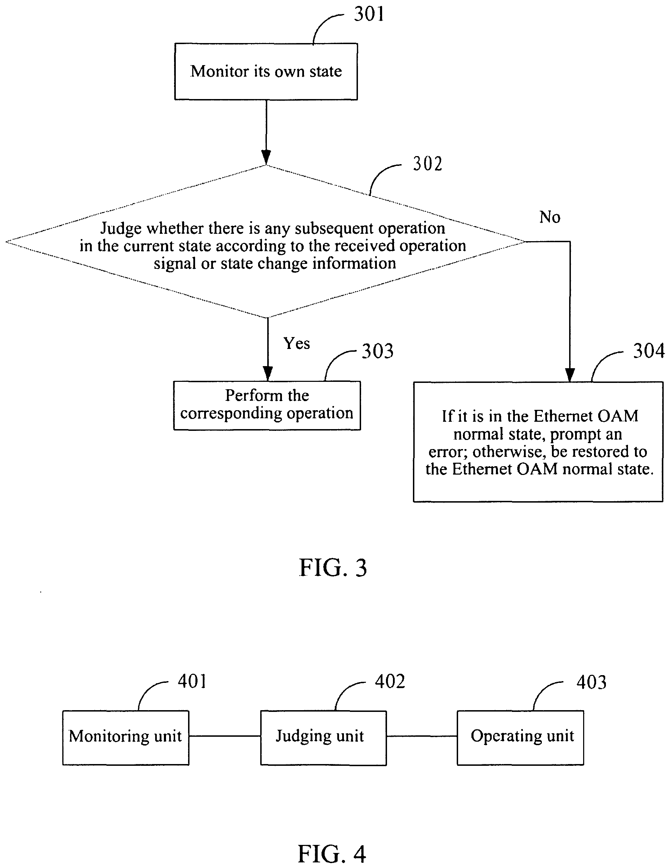

FIG. 3 illustrates a flow chart of the method for implementing the point-to-point remote loopback of the Ethernet in accordance with the present invention. Refer to FIG. 3, the method is applied to the controlling end and/or controlled end in the process of establishing and/or ending the remote loopback, and the method comprises:
301. Monitor its own state.

302: Judge whether there is any subsequent operation in the current state according to the received operation signal or state change information, and if yes, proceed to step 303; otherwise, proceed to step 304.

303. When determining there is subsequent operation, execute the corresponding operation. The corresponding operation comprises but not limited to the subsequent operation to be executed when the controlling end and/or the controlled end in the process of establishing and/or ending the remote loopback is in a certain state in the prior art. For example, when the controlling end is in the "OAM normal state", if it receives the operation signal of "establishing the remote loopback", it determines that there is subsequent operation, and the corresponding operation comprises: the controlling end entering into the "intermediate state of the controlling end establishing or ending the remote loopback", and sends a remote loopback enabling control frame to the controlled end; alternatively, when the controlling end is in the "intermediate state of the controlling end establishing or ending the remote loopback", if it receives the state change information of the controlled end, and the information indicates that the controlled end enters into the "controlled end loopback state", it determines that there is subsequent operation, and the corresponding operation might comprise: entering into the "controlling end loopback state"; alternatively, when the controlled end is in the "controlled end loopback state", if it receives the remote loopback disenabling control frame (that is, the operation signal), it determines that there is subsequent operation, and the corresponding operation might comprise: entering into the "OAM normal state", and sends its own state to the peer end via the Ethernet OAM frames.

304. When determining that there is no subsequent operation, if it is in the Ethernet OAM normal state, prompt an error; otherwise, be restored to the Ethernet OAM normal state.

Wherein, when this method is used in the controlling end, its own state comprises the Ethernet OAM state, the intermediate state of the controlling end establishing/ending the remote loopback or the controlling end loopback state; and/or, when this method is used in the controlled end, its own state also comprises the Ethernet OAM normal state or the controlled end loopback state.

When applying to the controlling end, the method might comprise:
1. When the controlling end is in the Ethernet OAM normal state, the process of the controlling end judging whether there is predetermined subsequent operation in its current state according to the received operation signal or the state change information comprises:
   When receiving the operation signal for ending the remote loopback, it determines that there is no subsequent operation.
2. When the controlling end is in the intermediate state of the controlling end establishing/ending the remote loopback, the process of the controlling end judging whether there is predetermined subsequent operation in its current state according to the received operation signal or the state change information comprises:
   When receiving the operation signal used for establishing/ending the remote loopback, it determines that there is no subsequent operation.

Alternatively, when receiving the information that the establishment of the remote loopback times out, it determines that there is no subsequent operation.

Alternatively, when receiving the remote loopback enabling control frame sent from the peer end, it determines that there is subsequent operation. Wherein, the corresponding operation comprises: compare the Media Access Control (MAC) address of the peer end and its own MAC address, and if its own MAC address is smaller than the peer end, continue to establish/end the remote loopback; if its own MAC address is larger, accept control by the peer end and become the remote loopback controlled end.
3. When the controlling end is in the controlling end loopback state, the process of the controlling end judging whether there is predetermined subsequent operation in its current state according to the received operation signal or the state change information comprises:
   When receiving the operation signal used for establishing the remote loopback, it determines that there is subsequent operation. Wherein, the corresponding operation comprises: continue the remote loopback and prompt an error.

Alternatively, when receiving the controlled end state change information, determine that there is no subsequent operation.

Alternatively, when receiving the state change information of the discovery state machine of the controlling end, it determines that there is no subsequent operation.

When applying to the controlled end, the method might comprise:
1. When the controlled end is in the Ethernet OAM normal state, the process of the controlled end judging whether there is predetermined subsequent operation in its current state according to the received operation signal or the state change information comprises:
   When receiving the operation signal for ending the remote loopback, it determines that there is no subsequent operation.
2. When the controlled end is in the controlled end loopback state, the process of the controlled end judging whether there is predetermined subsequent operation in its current state according to the received operation signal or the state change information comprises:
   When receiving the operation signal used for establishing/ending the remote loopback, it determines that there is subsequent operation. Wherein, the corresponding operation comprises: continue the remote loopback and prompt an error.

Alternatively, when receiving the state change information of the controlling end, determine that there is no subsequent operation.

Alternatively, when receiving the state change information of the discovery state machine of the controlled end, it determines that there is no subsequent operation.

FIG. 4 illustrates the structure of the apparatus for implementing the point-to-point remote loopback of the Ethernet in accordance with the present invention. The apparatus is integrated in the controlling end and/or the controlled end in the process of establishing and/or ending the remote loopback, refer to FIG. 4, the apparatus comprises:
The monitoring unit 401, configured to monitor its own state;

The judging unit 402, configured to judge whether there is any predetermined subsequent operation when the monitoring unit discovers its own current state according to the received operation signal or the state change information.

The operating unit 403, configured to perform the subsequent operation when it determines that there is a subsequent operation; otherwise, to prompt an error when the monitoring unit detects that its current state is OAM normal state; if its current state is not the OAM normal state, to be restored to the OAM normal state.

Wherein, when the apparatus is integrated in the controlling end, its own state comprises the Ethernet OAM normal state, the intermediate state of the controlling end establishing/ending the remote loopback or the controlling end loopback state; and/or, when the apparatus is integrated in the controlled end, its own state comprises the Ethernet OAM normal state or the controlled end loopback state.

Furthermore, when the apparatus is in the controlling end Ethernet OAM normal state, the judging unit might comprise:
the first judging subunit, configured to determine that there is no subsequent operation when receiving the operation signal of ending the remote loopback;
alternatively, when the apparatus is in the intermediate state of the controlling end establishing/ending the remote loopback, the judging unit might comprise:
   the second judging subunit, configured to determine that there is no subsequent operation when receiving the operation signal for establishing/ending the remote loopback; alternatively,
   the third judging subunit, configured to determine that there is no subsequent operation when receiving the information that the establishment of the remote loopback times out; alternatively,
   the fourth judging subunit, configured to determine that there is subsequent operation when receiving the remote loopback enabling control frame sent from the peer end;
   alternatively, when the apparatus is in the controlling end loopback state, the judging unit might comprise:
      the fifth judging subunit, configured to determine that there is subsequent operation when receiving the operation signal for establishing the remote loopback; alternatively,
      the sixth judging subunit, configured to determine that there is no subsequent operation when receiving the state change information of the controlled end; alternatively,
      the seventh judging subunit, configured to determine that there is no subsequent operation when receiving the state change information of the discovery state machine of the controlling end.

Correspondingly, the operating unit might comprise:
The first operating subunit, configured to compare the MAC address of the peer end and its own MAC address according to the judgment result of the fourth judging subunit, and if its MAC address is smaller, continue to establish/end the remote loopback; if its own MAC address is larger, accept control by the peer end and become the controlled end in the remote loopback; alternatively,
the second operating subunit, configured to continue the remote loopback and prompt errors according to the judgment result of the fifth judging subunit.

Furthermore, when the apparatus is in the controlled end Ethernet OAM normal state, the judging unit might comprise:
the eighth judging subunit, configured to determine that there is no subsequent operation when receiving the operation signal of ending the remote loopback;
alternatively, when the apparatus is in the controlled end loopback state, the judging unit might comprise:
   the ninth judging subunit, configured to determine that there is subsequent operation when receiving the operation signal used for establishing/ending the remote loopback; alternatively,
   the tenth judging subunit, configured to determine that there is no subsequent operation when receiving the state change information of the controlling end; alternatively,
   the eleventh subunit, configured to determine that there is no subsequent operation when receiving the state change information of the discovery state machine of the controlled end.

Correspondingly, the operating unit might comprise:
the third operating subunit, configured to continue the remote loopback and prompt errors according to the judgment result of the ninth judging subunit.

Each above judging subunit and operating subunit can be configured individually. Optionally, parts or all of the first judging subunit, the second judging subunit, the third judging subunit, the fourth judging subunit, the fifth judging subunit, the sixth judging subunit and the seventh judging subunit can be integrated together; correspondingly, the first and the second operating subunits can be integrated together. Optionally, some or all of the eighth, ninth, tenth and eleventh judging subunits can be integrated together.

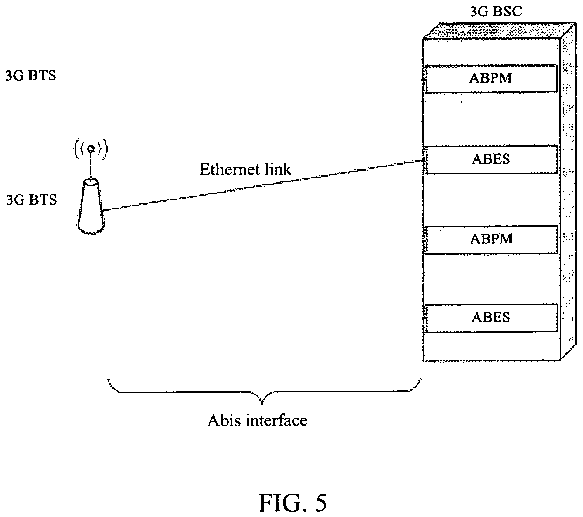

FIG. 5 illustrates the process of applying the method for implementing the point-to-point remote loopback of the Ethernet to the mobile communication base station system (BSS) in accordance with the present invention.

The system is simply illustrated as follows:
a) when the controlling end is in the "OAM normal state", if there is a user sending the control operation of "ending the remote loopback", prompt an error;
b) when the controlling end is in the process of establishing/ending the remote loopback, that is, the controlling end is in the "intermediate state of the controlling end establishing/ending the remote loopback", if there is an user sending the control operation of "establishing/ending the remote loopback", prompt an error; the remote loopback control timer can resend the remote loopback enabling/disenabling control frame, if the remote loopback does not successfully establish the remote loopback even though the timer times out, be restored to the "OAM normal state"; if it receives the remote loopback enabling control frame sent from the peer end at the same time, compare the MAC address of the peer end and its own MAC address, and if its own MAC address is smaller, no further processing and continue to establish/end the remote loopback, and if it own MAC address is larger, select to accept control by the peer end and become the controlled end in the remote loopback, and use this mechanism to avoid conflicts;
c) when the controlling end is in the "controlling end loopback state", if there is a user sending the control operation of "establishing the remote loopback", prompt an error; if it receives an Ethernet OAM frame including the state change information of the controlled end, it indicates that the peer end is not in the "controlled end loopback state" any more, and the local end is restored to the "OAM normal state";
d) when the controlling end is in the "controlling end loopback state", if there is link fault, the link timeout timer might time out, the discovery state machine in the local end might change its state, and the OAM session is lost, and the local end is restored to the "OAM normal state", wherein, the link timeout timer is the content defined in the 57th chapter: Operations, Administration, and Maintenance in the IEEE 802.3ah;
e) when the controlled end is in the "controlled end loopback state", if there is a user sending the control operation of "establishing/ending the remote loopback", prompt an error; if it receiving an Ethernet OAM frame including the state change information of the controlling end, it indicates that the peer end is not in the "controlling end loopback state" any more, and the local end is restored to the "OAM normal state";
f) when the controlled end is in the "controlled end loopback state", if there is a link fault, the link timeout timer might time out, the discovery state machine in the local end might change its state, and the OAM session is lost, and the local end is restored to the "OAM normal state", wherein, the link timeout timer is the content defined in the 57th chapter: Operations, Administration, and Maintenance in the IEEE 802.3ah.

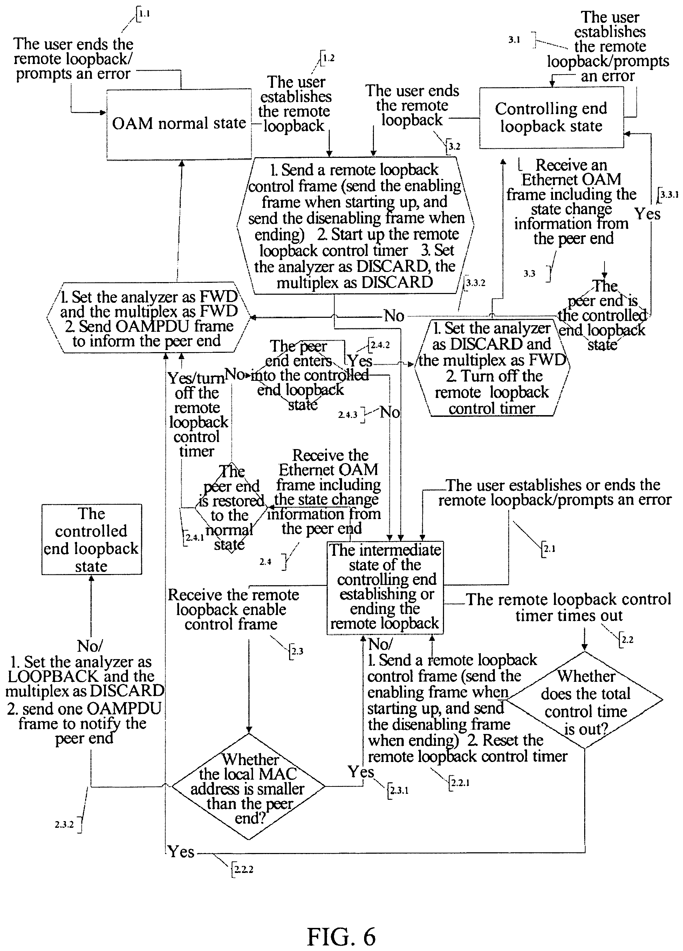

FIG. 6 illustrates the process of applying the method for implementing the point-to-point remote loopback of the Ethernet to the state machine of the remote loopback controlling end in the mobile communication BSS in accordance with the present invention, and the state machine corresponds to the flow chart of the method for implementing the point-to-point remote loopback of the Ethernet in accordance with the present invention.

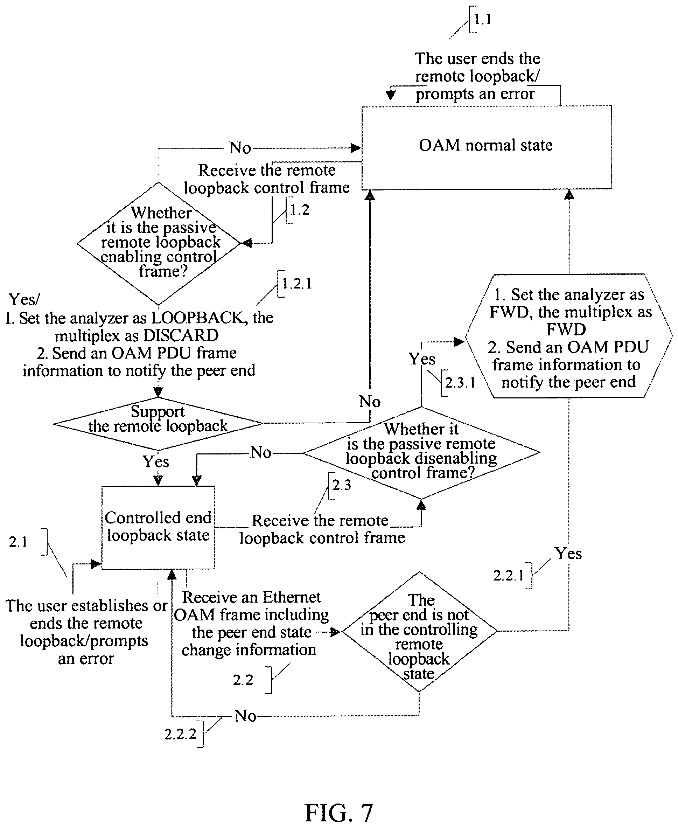

FIG. 7 illustrates the process of applying the method for implementing the point-to-point remote loopback of the Ethernet to the state machine of the remote loopback controlled end in the mobile communication BSS in accordance with the present invention, and the state machine corresponds to the flow chart of the method for implementing the point-to-point remote loopback of the Ethernet in accordance with the present invention.

In FIG. 5, when the interface between the base transceiver station (BTS) and the base station controller (BSC) of network elements of the BSS is through the Ethernet link of the packet, if the Ethernet OAM function defined in the 802.3ah is supported in the physical layer and data link layer of the BTS and the BSC protocol stacks, the remote loopback is a function must to be implemented.

Refer to FIG. 6, when establishing/ending the remote loopback between the BTS and the BSC, the method for specifically controlling the state machine of the remote loopback controlling end is as follows:
[1.1] The local end is in the "OAM normal state", the user ends the remote loopback and prompts an error.
[1.2] The local end is in the "OAM normal state", the user establishes the remote loopback and sends a remote loopback enabling control frame; start up the remote loopback control timer; the local end state is configured as the "intermediate state of the controlling end establishing or ending the remote loopback".
[2.1] The local end is in the "intermediate state of the controlling end establishing or ending the remote loopback", the user establishes/ends the remote loopback and prompts an error.
[2.2] The local end is in the "intermediate state of the controlling end establishing or ending the remote loopback", the remote loopback control timer expires.
[2.2.1] When the total control time does not arrive, if it is establishing the remote loopback, send a remote loopback enabling control frame and reset the remote loopback control timer; if it is ending the remote loopback, send a remote loopback enabling control frame; reset the remote loopback control timer.
[2.2.2] When the total control time arrives, the local end state is restored to the "OAM normal state", and an Ethernet OAM frame including the state change information of the local end is sent to the peer end.
[2.3] The local end is in the "intermediate state of the controlling end establishing or ending the remote loopback", the local end receives the remote loopback enabling control frame sent from the peer end, it judges the relationship between the MAC address of the local end and the MAC address of the peer end.
[2.3.1] If the MAC address of the local end is smaller, no processing.
[2.3.2] If the MAC address of the local end is larger, set the local end state as the "controlled end loopback state" and send an Ethernet OAM frame including the state change information of the local end to the peer end.
[2.4] The local end is in the "Intermediate state of the controlling end establishing or ending the remote loopback", receive the Ethernet OAM frame including the state change information from the peer end.
[2.4.1] The peer end is restored to the normal state, close the remote loopback control timer, and the local end state is restored to the "OAM normal state", and send an Ethernet OAM frame including the state change information of the local end to the peer end.
[2.4.2] The peer end enters into the "controlled end loopback state", the local end state is configured as "the controlling end loopback state", turn off the remote loopback control timer.
[2.4.3] The peer end enters into another state, no processing.
[3.1] The local end is in the "controlling end loopback state", the user establishes the remote loopback and prompts an error.
[3.2] The local end is in the "controlling end loopback state", the user ends the remote loopback and sends a remote loopback disenabling control frame; start up the remote loopback control timer; set the local end state as the "intermediate state of the controlling end establishing or ending the remote loopback".
[3.3] The local end is in the "controlling end loopback state", receive an Ethernet OAM frame including the state change information from the peer end.
[3.3.1] The peer end is in the "controlled end loopback state", no processing.
[3.3.2] The peer end is in another state, the local end state is restored to the "OAM normal state", and an Ethernet OAM frame including the state change information of the local end is sent to the peer end.

Refer to FIG. 7, when establishing/ending the remote loopback between the BTS and the BSC, the method for specifically controlling the state machine of the remote loopback controlled end is as follows:
[1.1] The local end is in the "OAM normal state", the user ends the remote loopback and prompts an error.
[1.2] The local end is in the "OAM normal state", receive the remote loopback control frame sent from the peer end.
[1.2.1] The received remote loopback control frame is the enabling control frame, and if the local end supports the remote loopback, enter into the "controlled end loopback state".
[2.1] The local end is in the "controlled end loopback state", the user establishes/ends the remote loopback and prompts an error.
[2.2] The local end is in the "controlled end loopback state", receive an Ethernet OAM frame including the state change information from the peer end.
[2.2.1] The peer end is not in the "controlling end loopback state", the local end state is restored to the "OAM normal state", and an Ethernet OAM frame including the state change information of the local end is sent to the peer end.
[2.2.2] The peer end is still in the "controlling end loopback state", no processing.
[2.3] The local end is in the "controlled end loopback state", receive the remote loopback control frame sent from the peer end.
[2.3.1] The received remote loopback control frame is the disenabling control frame, and the local end state is restored to the "OAM normal state", and an Ethernet OAM frame including the state change information of the local end is sent to the peer end.

With the technical scheme of each abovementioned embodiment, monitor the local end (controlling end/controlled end) state, judge whether there is subsequent operation according to the received operation signal or the state change information, so that the local end can execute the subsequent operation in any abnormal state or be restored to the OAM normal state from any abnormal state.

It can be understood by those skilled in the field that some or all steps in the abovementioned method can be fulfilled by instructing the relevant hardware components with a program, and said program may be stored in a computer readable storage media such as read only memory, magnetic disk or optical disk. Optionally, some or all steps in the abovementioned embodiment can be implemented with one or more integrated circuits. Correspondingly, each unit in the abovementioned embodiment can be implemented in the form of hardware or in the form of software function module, or their combinations.

The above description is only the specific embodiment of the present invention, and it should be pointed out that, for those skilled in the field, a plurality of modifications and improvements can be made without departing from the principle of the present invention, all these modification or improvements should belong to the scope of the claims of the present invention.

### Industrial Applicability

The method and apparatus for implementing the point-to-point remote loopback of the Ethernet in accordance with the present invention are used to monitor the local end state, and judge whether there is any subsequent operation according to the received operation signal or the state change information, so that the local end can execute the subsequent operation in any abnormal state or be restored to the OAM normal state from any abnormal state.

## Claims

1. A method for implementing point-to-point remote loopback of Ethernet, applied in a controlling end and/or a controlled end in a process of establishing and/or ending a remote loopback, the method comprising:
monitoring (301) state of the controlling end and/or the controlled end; and
judging (302) whether there is a predetermined subsequent operation in the monitored current state according to a received operation signal or state change information;
when determining there is a subsequent operation, executing (303) the subsequent operation;
when determining that there is no subsequent operation, if the controlling end and/or the controlled end is in an Ethernet operation, administration, and maintenance normal state, prompting (304) an error; otherwise, the controlling end and/or the controlled end being (304) restored to the Ethernet operation, administration, and maintenance normal state.

2. The method of claim 1, wherein, when the method is applied in the controlling end, the state of the controlling end comprises the Ethernet operation, administration, and maintenance normal state, an intermediate state of the controlling end establishing/ending the remote loopback or a controlling end loopback state; and/or, when the method is applied in the controlled end, the state of the controlled end comprises the Ethernet operation, administration, and maintenance normal state or a controlled end loopback state.

3. The method of claim 2, wherein, when the method is applied in the controlling end and when the controlling end is in the Ethernet operation, administration, and maintenance normal state, the step of judging (302) whether there is a predetermined subsequent operation in the current state according to a received operation signal or state change information comprises:
determing that there is no subsequent operation when receiving the operation signal for ending the remote loopback.

4. The method of claim 2, wherein, when the method is applied in the controlling end and when the controlling end is in the intermediate state of the controlling end establishing/ending the remote loopback, the step of judging (302) whether there is a predetermined subsequent operation in the current state according to the received operation signal or the state change information comprises:
determining that there is no subsequent operation when receiving the operation signal used for establishing/ending the remote loopback;
alternatively, determining that there is no subsequent operation when receiving information that establishment of the remote loopback times out;
alternatively, determining that there is no subsequent operation when receiving a remote loopback enabling control frame sent from a peer end.

5. The method of claim 4, wherein, when receiving the remote loopback enabling control frame sent from the peer end, the subsequent operation comprises:
comparing a media access control address of the peer end and the media access control address of the controlling end, and if the media access control address of the controlling end is smaller than that of the peer end, continuing to establish/end the remote loopback; if the media access control address of the controlling end is larger, accepting control by the peer end and becoming a remote loopback controlled end.

6. The method of claim 2, wherein, when the method is applied in the controlling end and when the controlling end is in the controlling end loopback state, the step of judging (302) whether there is a predetermined subsequent operation in the current state according to the received operation signal or the state change information comprises:
determining that there is a subsequent operation when receiving the operation signal used for establishing the remote loopback;
alternatively, determining that there is no subsequent operation when receiving the state change information of the controlled end;
alternatively, determining that there is no subsequent operation when receiving the state change information of a discovery state machine of the controlling end;
when receiving the operation signal of establishing the remote loopback, the subsequent operation comprises:
continuing the remote loopback and prompting an error.

7. The method of claim 2, wherein, when the method is applied in the controlled end and when the controlled end is in the Ethernet operation, administration, and maintenance normal state, the step of judging whether there is a predetermined subsequent operation in the current state according to the received operation signal or the state change information comprises:
determining that there is no subsequent operation when receiving the operation signal for ending the remote loopback.

8. The method of claim 2, wherein, when the method is applied in the controlled end and when the controlled end is in the controlled end loopback state, the step of judging (302) whether there is a predetermined subsequent operation in the current state according to the received operation signal or the state change information comprises:
determining that there is subsequent operation when receiving the operation signal used for establishing/ending the remote loopback;
alternatively, determining that there is no subsequent operation when receiving the state change information of the controlling end;
alternatively, determining that there is no subsequent operation when receiving the state change information of a discovery state machine of the controlled end;.
when receiving the operation signal of establishing the remote loopback, the subsequent operation comprises:
continuing the remote loopback and prompting an error.

9. An apparatus for implementing point-to-point remote loopback of Ethernet, integrated in a controlling end and/or a controlled end in a process of establishing and/or ending a remote loopback, the apparatus comprising:
a monitoring unit (401), configured to monitor a state of the controlling end and/or the controlled end;
a judging unit (402), configured to judge whether there is a predetermined subsequent operation in the current state monitored by the monitoring unit according to the received operation signal or the state change information; and
an operating unit (403), configured to perform the subsequent operation when determining that there is a subsequent operation according to the judgment result of the judging unit (402); otherwise, to prompt an error when the monitoring unit (401) discovers that the current state is an Ethernet operation, administration, and maintenance normal state, or to be restored to the Ethernet operation, administration, and maintenance normal state if the current state is not the Ethernet operation, administration, and maintenance normal state.

10. The apparatus of claim 9, wherein, when the apparatus is integrated in the controlling end, the state of the controlling end comprises the Ethernet operation, administration, and maintenance normal state; an intermediate state of the controlling end establishing/ending the remote loopback or a controlling end loopback state; and/or, when the apparatus is integrated in the controlled end, the state of the controlled end comprises the Ethernet operation, administration, and maintenance normal state or a controlled end loopback state.

11. The apparatus of claim 10, wherein, when the apparatus is integrated in the controlling end, and
when the apparatus is in the Ethernet operation, administration, and maintenance normal state, the judging unit (402) comprises:
a first judging subunit, configured to determine that there is no subsequent operation when receiving the operation signal of ending the remote loopback;
alternatively, when the apparatus is in the intermediate state of the controlling end establishing/ending the remote loopback, the judging unit comprises:
a second judging subunit, configured to determine that there is no subsequent operation when receiving the operation signal for establishing/ending the remote loopback; alternatively,
a third judging subunit, configured to determine that there is no subsequent operation when receiving information that establishment of the remote loopback times out; alternatively,
a fourth judging subunit, configured to determine that there is subsequent operation when receiving a remote loopback enabling control frame sent from a peer end;
alternatively, when the apparatus is in the controlling end loopback state, the judging unit comprises:
a fifth judging subunit, configured to determine that there is subsequent operation when receiving the operation signal for establishing the remote loopback; alternatively,
a sixth judging subunit, configured to determine that there is no subsequent operation when receiving the state change information of the controlled end; alternatively,
a seventh judging subunit, configured to determine that there is no subsequent operation when receiving the state change information of a discovery state machine of the controlling end.

12. The apparatus of claim 11, wherein the operating unit (403) comprises:
a first operating subunit, configured to compare a media access control address of the peer end and the media access control address of the controlling end according to the judgment result of the fourth judging subunit, and if the media access control address of the controlling end is smaller, continue to establish/end the remote loopback; if the media access control address of the controlling end is larger, accept control by the peer end and become the controlled end in the remote loopback; alternatively,
the second operating subunit, configured to continue the remote loopback and prompt errors according to the judgment result of the fifth judging subunit.

13. The apparatus of claim 10, wherein, when the apparatus is integrated in the controlled end, and
when the apparatus is in the Ethernet operation, administration, and maintenance normal state, the judging unit (402) comprises:
an eighth judging subunit, configured to determine that there is no subsequent operation when receiving the operation signal used for ending the remote loopback;
alternatively, when the apparatus is in the controlled end loopback state, the judging unit comprises:
a ninth judging subunit, configured to determine that there is subsequent operation when receiving the operation signal used for establishing/ending the remote loopback; alternatively,
a tenth judging subunit, configured to determine that there is no subsequent operation when receiving the state change information of the controlling end; alternatively,
an eleventh subunit, configured to determine that there is no subsequent operation when receiving the state change information of the discovery state machine of the controlled end.

14. The apparatus of claim 13, wherein the operating unit (403) comprises:
a third operating subunit, configure to continue the remote loopback and prompt an error according to the judgment result of the ninth judging subunit.

## Patentansprüche

1. Verfahren zum Implementieren von Ethernet-Punkt-zu-Punkt-Fernprüfschleifen, das an einer steuernden Seite und/oder an einer gesteuerten Seite in einem Prozess zum Herstellen und/oder Beenden einer Fernprüfschleife angewendet wird, wobei das Verfahren umfasst, dass:
ein Zustand der steuernden Seite und/oder der gesteuerten Seite überwacht wird (301); und
beurteilt wird (302), ob es eine vorbestimmte nachfolgende Operation in dem überwachten aktuellen Zustand in Übereinstimmung mit einem empfangenden Operationssignal oder mit Zustandsänderungsinformationen gibt;
wenn festgestellt wird, dass es eine nachfolgende Operation gibt, die nachfolgende Operation ausgeführt wird (303);
wenn festgestellt wird, dass es keine nachfolgende Operation gibt, wenn die steuernde Seite und/oder die gesteuerte Seite sich in einem Normalzustand des Betriebs, der Verwaltung und der Wartung eines Ethernets befindet/befinden, ein Fehler ausgelöst wird (304); andernfalls die steuernde Seite und/oder die gesteuerte Seite wieder in den Normalzustand des Betriebs, der Verwaltung und der Wartung eines Ethernets versetzt wird/werden (304).

2. Verfahren nach Anspruch 1, wobei, wenn das Verfahren an der steuernden Seite angewendet wird, der Zustand der steuernden Seite den Normalzustand des Betriebs, der Verwaltung und der Wartung eines Ethernets, einen Zwischenzustand der steuernden Seite zum Herstellen/Beenden der Fernprüfschleife oder einen Prüfschleifenzustand der steuernden Seite umfasst; und/oder, wenn das Verfahren an der gesteuerten Seite angewendet wird, der Zustand der gesteuerten Seite den Normalzustand des Betriebs, der Verwaltung und der Wartung eines Ethernets oder einen Prüfschleifenzustand der gesteuerten Seite umfasst.

3. Verfahren nach Anspruch 2, wobei, wenn das Verfahren an der steuernden Seite angewendet wird und wenn sich die steuernde Seite in dem Normalzustand des Betriebs, der Verwaltung und der Wartung eines Ethernets befindet, der Schritt des Beurteilens (302), ob es eine vorbestimmte nachfolgende Operation in dem aktuellen Zustand in Übereinstimmung mit einem empfangenden Operationssignal oder mit Zustandswechselinformationen gibt, umfasst, dass:
festgestellt wird, dass es keine nachfolgende Operation gibt, wenn das Operationssignal zum Beenden der Fernprüfschleife empfangen wird.

4. Verfahren nach Anspruch 2, wobei, wenn das Verfahren an der steuernden Seite angewendet wird und wenn sich die steuernde Seite in dem Zwischenzustand befindet, bei dem die steuernde Seite die Fernprüfschleife herstellt/beendet, der Schritt des Beurteilens (302), ob es eine vorbestimmte nachfolgende Operation in dem aktuellen Zustand in Übereinstimmung mit dem empfangenen Operationssignal oder mit den Zustandswechselinformationen gibt, umfasst, dass:
festgestellt wird, dass es keine nachfolgende Operation gibt, wenn das Operationssignal empfangen wird, das zum Herstellen/Beenden der Fernprüfschleife verwendet wird;
alternativ festgestellt wird, dass es keine nachfolgende Operation gibt, wenn Informationen empfangen werden, dass beim Herstellen der Fernprüfschleife eine Zeitüberschreitung aufgetreten ist;
alternativ festgestellt wird, dass es keine nachfolgende Operation gibt, wenn ein Steuerungsframe zum Aktivieren einer Fernprüfschleife empfangen wird, der von einer Peer-Seite gesendet wurde.

5. Verfahren nach Anspruch 4, wobei, wenn der Steuerungsframe zum Aktivieren einer Fernprüfschleife, der von der Peer-Seite gesendet wurde, empfangen wird, die nachfolgende Operation umfasst, dass:
eine Medienzugriffssteuerungsadresse der Peer-Seite und die Medienzugriffssteuerungsadresse der steuernden Seite verglichen werden, und wenn die Medienzugriffssteuerungsadresse der steuernden Seite kleiner als diejenige der Peer-Seite ist, das Herstellen/Beenden der Fernprüfschleife fortgesetzt wird; wenn die Medienzugriffssteuerungsadresse der steuernden Seite größer ist, eine Steuerung durch die Peer-Seite akzeptiert wird und diese zu einer gesteuerten Seite einer Fernprüfschleife wird.

6. Verfahren nach Anspruch 2, wobei, wenn das Verfahren an der steuernden Seite angewendet wird und wenn sich die steuernde Seite in dem Prüfschleifenzustand der steuernden Seite befindet, der Schritt des Beurteilens (302), ob es eine vorbestimmte nachfolgende Operation in dem aktuellen Zustand in Übereinstimmung mit dem empfangenen Operationssignal oder mit den Zustandswechselinformationen gibt, umfasst, dass:
festgestellt wird, dass es eine nachfolgende Operation gibt, wenn das Operationssignal empfangen wird, das verwendet wird, um die Fernprüfschleife herzustellen;
alternativ festgestellt wird, dass es keine nachfolgende Operation gibt, wenn die Zustandswechselinformationen der gesteuerten Seite empfangen werden;
alternativ festgestellt wird, dass es keine nachfolgende Operation gibt, wenn die Zustandswechselinformationen einer Zustandsermittlungsmaschine der steuernden Seite empfangen werden;
wenn das Operationssignal des Herstellens der Fernprüfschleife empfangen wird, die nachfolgende Operation umfasst, dass:
die Fernprüfschleife fortgesetzt wird und ein Fehler ausgelöst wird.

7. Verfahren nach Anspruch 2, wobei, wenn das Verfahren an der gesteuerten Seite angewendet wird und wenn sich die gesteuerte Seite in dem Normalzustand des Betriebs, der Verwaltung und der Wartung eines Ethernets befindet, der Schritt des Beurteilens, ob es eine vorbestimmte nachfolgende Operation in dem aktuellen Zustand in Übereinstimmung mit dem empfangenen Operationssignal oder mit den Zustandswechselinformationen gibt, umfasst, dass:
festgestellt wird, dass es keine nachfolgende Operation gibt, wenn das Operationssignal zum Beenden der Fernprüfschleife empfangen wird.

8. Verfahren nach Anspruch 2, wobei, wenn das Verfahren an der gesteuerten Seite angewendet wird und wenn sich die gesteuerte Seite in dem Prüfschleifenzustand der gesteuerten Seite befindet, der Schritt des Beurteilens (302), ob es eine vorbestimmte nachfolgende Operation in dem aktuellen Zustand in Übereinstimmung mit dem empfangenen Operationssignal oder mit den Zustandswechselinformationen gibt, umfasst, dass:
festgestellt wird, dass es eine nachfolgende Operation gibt, wenn das Operationssignal empfangen wird, das zum Herstellen/Beenden der Fernprüfschleife verwendet wird;
alternativ festgestellt wird, dass es keine nachfolgende Operation gibt, wenn die Zustandswechselinformationen der steuernden Seite empfangen werden;
alternativ festgestellt wird, dass es keine nachfolgende Operation gibt, wenn die Zustandswechselinformationen einer Zustandsermittlungsmaschine der gesteuerten Seite empfangen werden;
wenn das Operationssignal zum Herstellen der Fernprüfschleife empfangen wird, die nachfolgende Operation umfasst, dass:
die Fernprüfschleife fortgesetzt wird und ein Fehler ausgelöst wird.

9. Vorrichtung zum Implementieren von Ethernet-Punkt-zu-Punkt-Fernprüfschleifen, die in eine steuernde Seite und/oder eine gesteuerte Seite in einem Prozess des Herstellens und/oder Beendens einer Fernprüfschleife integriert ist, wobei die Vorrichtung umfasst:
eine Überwachungseinheit (401), die ausgestaltet ist, um einen Zustand der steuernden Seite und/oder der gesteuerten Seite zu überwachen;
eine Beurteilungseinheit (402), die ausgestaltet ist, um zu beurteilen, ob es eine vorbestimmte nachfolgende Operation in dem aktuellen Zustand, der durch die Bewachungseinheit überwacht wird, in Übereinstimmung mit dem empfangenen Operationssignal oder mit den Zustandswechselinformationen gibt; und
eine Operationseinheit (403), die ausgestaltet ist, um die nachfolgende Operation auszuführen, wenn festgestellt wird, dass es eine nachfolgende Operation in Übereinstimmung mit dem Beurteilungsergebnis der Beurteilungseinheit (402) gibt; andernfalls, um einen Fehler auszulösen, wenn die Überwachungseinheit (401) entdeckt, dass der aktuelle Zustand ein Normalzustand des Betriebs, der Verwaltung und der Wartung eines Ethernets ist, oder um den Normalzustand des Betriebs, der Verwaltung und der Wartung eines Ethernets wiederherzustellen, wenn der aktuelle Zustand nicht der Normalzustand des Betriebs, der Verwaltung und der Wartung eines Ethernets ist.

10. Vorrichtung nach Anspruch 9, wobei, wenn die Vorrichtung in die steuernde Seite integriert ist, der Zustand der steuernden Seite den Normalzustand des Betriebs, der Verwaltung und der Wartung eines Ethernets; einen Zwischenzustand der steuernden Seite zum Herstellen/Beenden der Fernprüfschleife oder einen Prüfschleifenzustand der steuernden Seite umfasst; und/oder, wenn die Vorrichtung in die gesteuerte Seite integriert ist, der Zustand der gesteuerten Seite den Normalzustand des Betriebs, der Verwaltung und der Wartung eines Ethernets oder einen Prüfschleifenzustand der gesteuerten Seite umfasst.

11. Vorrichtung nach Anspruch 10, wobei, wenn die Vorrichtung in die steuernde Seite integriert ist, und
wenn sich die Vorrichtung in dem Normalzustand des Betriebs, der Verwaltung und der Wartung eines Ethernets befindet, die Beurteilungseinheit (402) umfasst:
eine erste Beurteilungs-Teileinheit, die ausgestaltet ist, um festzustellen, dass es keine nachfolgende Operation gibt, wenn das Operationssignal zum Beenden der Fernprüfschleife empfangen wird;
alternativ, wenn sich die Vorrichtung in dem Zwischenzustand befindet, dass die steuernde Seite die Fernprüfschleife herstellt/beendet, die Beurteilungseinheit umfasst:
eine zweite Beurteilungs-Teileinheit, die ausgestaltet ist, um festzustellen, dass es keine nachfolgende Operation gibt, wenn das Operationssignal zum Herstellen/Beenden der Fernprüfschleife empfangen wird; alternativ,
eine dritte Beurteilungs-Teileinheit, die ausgestaltet ist, um festzustellen, dass es keine nachfolgende Operation gibt, wenn Informationen empfangen werden, dass beim Herstellen der Fernprüfschleife eine Zeitüberschreitung aufgetreten ist; alternativ,
eine für vierte Beurteilungs-Teileinheit, die ausgestaltet ist, um festzustellen, dass es eine nachfolgende Operation gibt, wenn ein Steuerungsframe zum Aktivieren einer Fernprüfschleife empfangen wird, der von einer Peer-Seite gesendet wurde;
alternativ, wenn sich die Vorrichtung in dem Prüfschleifenzustand der steuernden Seite befindet, die Beurteilungseinheit umfasst:
eine fünfte Beurteilungs-Teileinheit, die ausgestaltet ist, um festzustellen, dass es eine nachfolgende Operation gibt, wenn das Operationssignal zum Herstellen der Fernprüfschleife empfangen wird; alternativ,
eine sechste Beurteilungs-Teileinheit, die ausgestaltet ist, um festzustellen, dass es keine nachfolgende Operation gibt, wenn die Zustandswechselinformationen der gesteuerten Seite empfangen werden; alternativ,
eine siebte Beurteilungs-Teileinheit, die ausgestaltet ist, um festzustellen, dass es keine nachfolgende Operation gibt, wenn die Zustandswechselinformationen von einer Zustandsermittlungsmaschine der steuernden Seite empfangen werden.

12. Vorrichtung nach Anspruch 11, wobei die Operationseinheit (403) umfasst:
eine erste Operations-Teileinheit, die ausgestaltet ist, um eine Medienzugriffssteuerungsadresse der Peer-Seite und die Medienzugriffssteuerungsadresse der steuernden Seite in Übereinstimmung mit dem Beurteilungsergebnis der vierten Beurteilungs-Teileinheit zu vergleichen, und wenn die Medienzugriffssteuerungsadresse der steuernden Seite kleiner ist, das Herstellen/Beenden der Fernprüfschleife fortzusetzen; wenn die Medienzugriffssteuerungsadresse der steuernden Seite größer ist, eine Steuerung durch die Peer-Seite zu akzeptieren und diese zu der gesteuerten Seite in der Fernprüfschleife wird; alternativ,
die zweite Operations-Teileinheit, die ausgestaltet ist, um die Fernprüfschleife fortzusetzen und Fehler in Übereinstimmung mit dem Beurteilungsergebnis der fünften Beurteilungs-Teileinheit auszulösen.

13. Vorrichtung nach Anspruch 10, wobei, wenn die Vorrichtung in die gesteuerte Seite integriert ist, und
wenn sich die Vorrichtung in dem Normalzustand des Betriebs, der Verwaltung und der Wartung eines Ethernets befindet, die Beurteilungseinheit (402) umfasst:
eine achte Beurteilungs-Teileinheit, die ausgestaltet ist, um festzustellen, dass es keine nachfolgende Operation gibt, wenn das Operationssignal empfangen wird, das zum Beenden der Fernprüfschleife verwendet wird;
alternativ, wenn sich die Vorrichtung in dem Prüfschleifenzustand der gesteuerten Seite befindet, die Beurteilungseinheit umfasst:
eine neunte Beurteilungs-Teileinheit, die ausgestaltet ist, um festzustellen, dass es eine nachfolgende Operation gibt, wenn das Operationssignal empfangen wird, das verwendet wird, um die Fernprüfschleife herzustellen/zu beenden; alternativ,
eine zehnte Beurteilungs-Teileinheit, die ausgestaltet ist, um festzustellen, dass es keine nachfolgende Operation gibt, wenn die Zustandswechselinformationen der steuernden Seite empfangen werden; alternativ,
eine elfte Teileinheit, die ausgestaltet ist, um festzustellen, dass es keine nachfolgende Operation gibt, wenn die Zustandswechselinformationen der Zustandsermittlungsmaschine der gesteuerten Seite empfangen werden.

14. Vorrichtung nach Anspruch 13, wobei die Operationseinheit (403) umfasst:
eine dritte Operations-Teileinheit, die ausgestaltet ist, um die Fernprüfschleife fortzusetzen und um einen Fehler in Übereinstimmung mit dem Beurteilungsergebnis der neunten Beurteilungs-Teileinheit auszulösen.

## Revendications

1. Procédé de mise en oeuvre d'un bouclage à distance point à point Ethernet, appliqué dans une extrémité de commande et/ou une extrémité commandée dans un processus d'établissement et/ou de terminaison d'un bouclage à distance, le procédé comprenant les étapes consistant à :
surveiller (301) l'état de l'extrémité de commande et/ou de l'extrémité commandée ; et
juger (302) s'il y a une opération suivante prédéterminée dans l'état courant surveillé en fonction d'un signal d'opération ou d'une information de changement d'état reçu(e) ;
lorsqu'il est déterminé qu'il y a une opération suivante, exécuter (303) l'opération suivante ;
lorsqu'il est déterminé qu'il n'y a pas d'opération suivante, si l'extrémité de commande et/ou l'extrémité commandée est dans un état normal de fonctionnement, d'administration et de maintenance Ethernet, déclencher (304) une erreur ; sinon, l'extrémité de commande et/ou l'extrémité commandée est restaurée (304) à l'état normal de fonctionnement, d'administration et de maintenance Ethernet.

2. Procédé selon la revendication 1, dans lequel, lorsque le procédé est appliqué dans l'extrémité de commande, l'état de l'extrémité de commande comprend l'état normal de fonctionnement, d'administration et de maintenance Ethernet, un état intermédiaire dans lequel l'extrémité de commande établit/termine le bouclage à distance ou un état de bouclage d'extrémité de commande ; et/ou, lorsque le procédé est appliqué dans l'extrémité commandée, l'état de l'extrémité commandée comprend l'état normal de fonctionnement, d'administration et de maintenance Ethernet ou un état de bouclage d'extrémité commandée.

3. Procédé selon la revendication 2, dans lequel, lorsque le procédé est appliqué dans l'extrémité de commande et lorsque l'extrémité de commande est dans l'état normal de fonctionnement, d'administration et de maintenance Ethernet, l'étape consistant à juger (302) s'il y a une opération suivante prédéterminée dans l'état courant en fonction d'un signal d'opération ou d'une information de changement d'état reçu(e) consiste à :
déterminer qu'il n'y a pas d'opération suivante en cas de réception du signal d'opération pour terminer le bouclage à distance.

4. Procédé selon la revendication 2, dans lequel, lorsque le procédé est appliqué dans l'extrémité de commande et lorsque l'extrémité de commande est dans l'état intermédiaire dans lequel l'extrémité de commande établit/termine le bouclage à distance, l'étape consistant à juger (302) s'il y a une opération suivante prédéterminée dans l'état courant en fonction du signal d'opération ou de l'information de changement d'état reçu(e) consiste à :
déterminer qu'il n'y a pas d'opération suivante en cas de réception du signal d'opération utilisé pour établir/terminer le bouclage à distance ;
autrement, déterminer qu'il n'y a pas d'opération suivante en cas de réception de l'information que l'établissement du bouclage à distance a dépassé le temps imparti ;
autrement, déterminer qu'il n'y a pas d'opération suivante en cas de réception d'une trame de commande d'activation de bouclage à distance envoyée par une extrémité homologue.

5. Procédé selon la revendication 4, dans lequel, en cas de réception de la trame de commande d'activation de bouclage à distance envoyée par l'extrémité homologue, l'opération suivante consiste à :
comparer une adresse de commande d'accès au média de l'extrémité homologue et l'adresse de commande d'accès au média de l'extrémité de commande, et si l'adresse de commande d'accès au média de l'extrémité de commande est plus petite que celle de l'extrémité homologue, continuer à établir/terminer le bouclage à distance ; si l'adresse de commande d'accès au média de l'extrémité de commande est plus grande, accepter la commande par l'extrémité homologue et devenir une extrémité commandée de bouclage à distance.

6. Procédé selon la revendication 2, dans lequel, lorsque le procédé est appliqué dans l'extrémité de commande et lorsque l'extrémité de commande est dans l'état de bouclage d'extrémité de commande, l'étape consistant à juger (302) s'il y a une opération suivante prédéterminée dans l'état courant en fonction du signal d'opération ou de l'information de changement d'état reçu(e) consiste à :
déterminer qu'il y a une opération suivante en cas de réception du signal d'opération utilisé pour établir le bouclage à distance ;
autrement, déterminer qu'il n'y a pas d'opération suivante en cas de réception de l'information de changement d'état de l'extrémité commandée ;
autrement, déterminer qu'il n'y a pas d'opération suivante en cas de réception de l'information de changement d'état d'une machine d'état de découverte de l'extrémité de commande ;
en cas de réception du signal d'opération pour l'établissement du bouclage à distance, l'opération suivante consiste à :
continuer le bouclage à distance et déclencher une erreur.

7. Procédé selon la revendication 2, dans lequel, lorsque le procédé est appliqué dans l'extrémité commandée et lorsque l'extrémité commandée est dans l'état normal de fonctionnement, d'administration et de maintenance Ethernet, l'étape consistant à juger s'il y a une opération suivante prédéterminée dans l'état courant en fonction du signal d'opération ou de l'information de changement d'état reçu(e) consiste à :
déterminer qu'il n'y a pas d'opération suivante en cas de réception du signal d'opération pour terminer le bouclage à distance.

8. Procédé selon la revendication 2, dans lequel, lorsque le procédé est appliqué dans l'extrémité commandée et lorsque l'extrémité commandée est dans l'état de bouclage d'extrémité commandée, l'étape consistant à juger (302) s'il y a une opération suivante prédéterminée dans l'état courant en fonction du signal d'opération ou de l'information de changement d'état reçu(e) consiste à :
déterminer qu'il y a une opération suivante en cas de réception du signal d'opération utilisé pour établir/terminer le bouclage à distance ;
autrement, déterminer qu'il n'y a pas d'opération suivante en cas de réception de l'information de changement d'état de l'extrémité de commande ;
autrement, déterminer qu'il n'y a pas d'opération suivante en cas de réception de l'information de changement d'état d'une machine d'état de découverte de l'extrémité commandée ;
en cas de réception du signal d'opération pour l'établissement du bouclage à distance, l'opération suivante consiste à :
continuer le bouclage à distance et déclencher une erreur.

9. Appareil pour mettre en oeuvre un bouclage à distance point à point Ethernet, intégré dans une extrémité de commande et/ou une extrémité commandée dans un processus d'établissement et/ou de terminaison d'un bouclage à distance, l'appareil comprenant :
une unité de surveillance (401), configurée pour surveiller un état de l'extrémité de commande et/ou de l'extrémité commandée ;
une unité de jugement (402), configurée pour juger s'il y a une opération suivante prédéterminée dans l'état courant surveillé par l'unité de surveillance en fonction du signal d'opération ou de l'information de changement d'état reçu(e) ; et
une unité d'opération (403), configurée pour effectuer l'opération suivante lorsqu'il est déterminé qu'il y a une opération suivante en fonction du résultat de jugement de l'unité de jugement (402) ; sinon, pour déclencher une erreur lorsque l'unité de surveillance (401) découvre que l'état courant est un état normal de fonctionnement, d'administration et de maintenance Ethernet, ou pour être restaurée à l'état normal de fonctionnement,
d'administration et de maintenance Ethernet si l'état courant n'est pas l'état normal de fonctionnement, d'administration et de maintenance Ethernet.

10. Appareil selon la revendication 9, dans lequel, lorsque l'appareil est intégré dans l'extrémité de commande, l'état de l'extrémité de commande comprend l'état normal de fonctionnement, d'administration et de maintenance Ethernet ; un état intermédiaire dans lequel l'extrémité de commande établit/termine le bouclage à distance ou un état de bouclage d'extrémité de commande ; et/ou, lorsque l'appareil est intégré dans l'extrémité commandée, l'état de l'extrémité commandée comprend l'état normal de fonctionnement, d'administration et de maintenance Ethernet ou un état de bouclage d'extrémité commandée.

11. Appareil selon la revendication 10, dans lequel, lorsque l'appareil est intégré dans l'extrémité de commande, et
lorsque l'appareil est dans l'état normal de fonctionnement, d'administration et de maintenance Ethernet, l'unité de jugement (402) comprend :
une première sous-unité de jugement, configurée pour déterminer qu'il n'y a pas d'opération suivante en cas de réception du signal pour terminer le bouclage à distance ;
autrement, lorsque l'appareil est dans l'état intermédiaire dans lequel l'extrémité de commande établit ou termine le bouclage à distance, l'unité de jugement comprend :
une deuxième sous-unité de jugement, configurée pour déterminer qu'il n'y a pas d'opération suivante en cas de réception du signal d'opération pour établir/terminer le bouclage à distance ; autrement,
une troisième sous-unité de jugement, configurée pour déterminer qu'il n'y a pas d'opération suivante en cas de réception de l'information que l'établissement du bouclage à distance a dépassé le temps imparti ; autrement,
une quatrième sous-unité de jugement, configurée pour déterminer qu'il y a une opération suivante en cas de réception d'une trame de commande d'activation de bouclage à distance envoyée par une extrémité homologue ; autrement, lorsque l'appareil est dans l'état de bouclage d'extrémité de commande, l'unité de jugement comprend :
une cinquième sous-unité de jugement, configurée pour déterminer qu'il y a une opération suivante en cas de réception du signal d'opération pour établir le bouclage à distance ; autrement,
une sixième sous-unité de jugement, configurée pour déterminer qu'il n'y a pas d'opération suivante en cas de réception de l'information de changement d'état de l'extrémité commandée ; autrement,
une septième sous-unité de jugement, configurée pour déterminer qu'il n'y a pas d'opération suivante en cas de réception de l'information de changement d'état d'une machine d'état de découverte de l'extrémité de commande.

12. Appareil selon la revendication 11, dans lequel l'unité d'opération (403) comprend :
une première sous-unité d'opération, configurée pour comparer une adresse de commande d'accès au média de l'extrémité homologue et l'adresse de commande d'accès au média de l'extrémité de commande en fonction du résultat de jugement de la quatrième sous-unité de jugement, et si l'adresse de commande d'accès au média de l'extrémité de commande est plus petite, continuer à établir/terminer le bouclage à distance ; si l'adresse de commande d'accès au média de l'extrémité de commande est plus grande, accepter le contrôle par l'extrémité homologue et devenir l'extrémité commandée dans le bouclage à distance ; autrement,
une deuxième sous-unité d'opération, configurée pour continuer le bouclage à distance et déclencher des erreurs en fonction du résultat de jugement de la cinquième sous-unité de jugement.

13. Appareil selon la revendication 10, dans lequel, lorsque l'appareil est intégré dans l'extrémité commandée, et
lorsque l'appareil est dans l'état normal de fonctionnement, d'administration et de maintenance Ethernet, l'unité de jugement (402) comprend :
une huitième sous-unité de jugement, configurée pour déterminer qu'il n'y a pas d'opération suivante en cas de réception du signal d'opération utilisé pour terminer le bouclage à distance ;
autrement, lorsque l'appareil est dans l'état de bouclage d'extrémité commandée, l'unité de jugement comprend :
une neuvième sous-unité de jugement, configurée pour déterminer qu'il y a une opération suivante en cas de réception du signal d'opération utilisé pour établir/terminer le bouclage à distance ; autrement,
une dixième sous-unité de jugement, configurée pour déterminer qu'il n'y a pas d'opération suivante en cas de réception de l'information de changement d'état de l'extrémité de commande ; autrement,
une onzième sous-unité, configurée pour déterminer qu'il n'y a pas d'opération suivante en cas de réception de l'information de changement d'état de la machine d'état de découverte de l'extrémité commandée.

14. Appareil selon la revendication 13, dans lequel l'unité d'opération (403) comprend :
une troisième sous-unité d'opération, configurée pour continuer le bouclage à distance et déclencher une erreur en fonction du résultat de jugement de la neuvième sous-unité de jugement.
